# EUROPEAN PATENT APPLICATION

(11) **EP 0 757 963 A1**
(43) Date of publication of application: **12.02.1997**
(21) Application number: 96202222.4
(22) Date of filing: 07.08.1996
(51) Int. Cl.: B65H 18/28, A01G 9/14

(54) **Method of folding a plastic film and a roll of plastic film so folded**

(30) Priority: 07.08.1995 NL 1000940
(71) Applicant: HYPLAST N.V., B-2320 Hoogstraten (BE)
(72) Inventor: Daponte, Tony Leon Filip, 2070 Zwijndrecht (BE); Verschaeren, Patrik Corneel Mathilde, 2960 Brecht (BE)
(74) Representative: Van Weele, Paul Johannes Frits

(57) **Abstract**

Method for folding an extruded tubular plastic film as well as packaging a so folded plastic film into a roll or package. Subsequent to a first folding operation consisting of urging two opposite sides of the plastic tubular film in an inward direction to form a gusseted construction and flattening the gusseted construction into a flattened sheet having four layers of plastic film disposed over each other, a second folding operation is carried out which produces a smaller sheet having eight layers or film disposed over each other. The sheet of folded plastic film is eventually rolled into a package comprised of a cylindrical body or roll. Prior to the packaging operation a third folding operation is carried out in which the sheet is folded into an even smaller folded sheet having sixteen layers of plastic film disposed over each other. Using and extruded tubular film having a diameter of between 5 and 6 metres and thus a circumferential dimension between 16 and 19 metres, the method of the inventions enables to package the plastic film into a roll comprising a sheet having sixteen layers of plastic film disposed over each other and having a longitudinal dimension between one and two metres, preferably between 1 and 1.5 metres. A roll of this size is reasonably manageable for most applications, such as in agricultural industry.

## Description

The invention relates to a method of folding a plastic film such as a film for greenhouses, silos and general use on or in the ground from an extruded tubular plastic film, comprising the steps of a first folding operation consisting of inwardly folding at two opposite sides of the tube and subsequent flattening of the tube into a flat sheet of flattened tubular plastic film having a gusseted construction with four layers of plastic film disposed over each other at each side and the subsequent application of a second folding operation for producing a narrower sheet having eight layers of plastic film disposed over each other near the edges, as well as a packaging step comprising a rolling operation for rolling the so folded sheet of flattened tubular plastic film into a cylindrically shaped object or roll.

Rolls of plastic film are used for example for covering greenhouses. Such films customaryly have a large width, for example more than 10 metres, meaning that to enable manipulation of the film certain demands have to be met. A method for the installation of greenhouse plastic film has been described in US patent specification 4,795,415 in which the use of a film is disclosed wherein the sheet has been packaged into a roll according to a method which has been disclosed in US patent specification 4,674,999. The roll is placed on the apex of the greenhouse and is unrolled over the full length of the greenhouse. The tubular plastic film has been slit in the longitudinal direction beforehand, care has been taken that the slit is disposed along the centerline of the folded sheet. After unrolling of the roll over the apex of the greenhouse the folded plastic film forms a sheet which is symmetrically positioned with respect to the apex of the greenhouse. This symmetrical disposition enables the unfolding of the film to both sides without having to displace the film with respect to the apex. The film has been folded using a folding method comprising a single folding operation so that as a consequence the method is only applicable to films of a comparatively small width dimension.

The afore cited prior art method, in the case of films having a large width dimension, such as 16 of 18 metres of more, produces packages having a width dimension of 2 metres or more. A width dimension of this size makes handling prohibitively difficult for many applications. A roll having a width of more than 2 metres of more cannot be transported easily in the truck of a passenger car or in small utility vans or trucks. Placing the roll on the apex of a greenhouse or at another required place is sometimes difficult due to the substantial width of the roll. The result has been that manifacturers have abandoned producing rolls and have commenced to package the film within the required package dimension as a zig zag folded film sheet. Such packages however are not easy to handle and the folding operation during production requires special devices for packaging the plastic film subsequent to the removal of the film from the film production arrangement.

It is an object of the present invention to provide a method of folding a plastic film of the kind defined in the above introduction wich however produces a roll having a more manageable shape and is characterized that prior to the rolling operation the said sheet is folded in a third folding operation to form an even narrower sheet of flattened tubular plastic film having sixteen layers of plastic film disposed on each other near the edges. By folding the sheet of plastic film once more according to the method of the invention prior to packaging the sheet into a roll a resulting roll is produced having a manageable width dimension so that the roll may be manipulated more easily than a package of zig zag folded film, yet is not too wide for practical use, for instance for agrarian purposes.

In practise an embodiment of the invention has proven to be of intrest, which is characterized in that in the said second folding operation sideparts near respective sides of the said sheet are folded along respective fold lines parallel to and spaced from a longitudinal centerline of the sheet and in the third folding operation the sheet is folded double along the said centerline to form a double folded sheet. It has been found that the three different folding operations, carried out in the order described above, may be carried out in a continuous production process producing plastic films having a width dimension for instance between 16 and 18 metres. As a first step the film is urged inwardly at opposite side edges of the tube so as to form a somewhat belowed type of tube and subsequently flattened after which the so flattened sheet of film is guided over one or more guiderollers of the production machine. Subsequently means acting on the side edges of the sheet effect a second folding operation. This is a symmetrical folding operation so that the now resulting smaller sheet may continue its movement having its centerline in the same previous plane. After this the sheet is passed over a so called folding triangle which is known from the prior art. In this kind of folding device the resulting double folded sheet is outputted in a direction which is perpendicular to the direction of input. The double folded sheet subsequently is fed to the packaging device for rolling the sheet. It has been found that these three folding operations can be carried out advantageously one after the other without the occurence of undesireable pleats of creases in the film.

A further embodiment of the invention is preferably used, which is characterized in that the double folding is executed in a folding direction (B), such that the said sideparts are disposed on the outside of the double folded sheet. The advantage of this embodiment is that the double folding operation creates only minimal tension in the central part of the sheet. This will become more apparent from the description of the drawing later on.

Another possibilty for a method according to the invention is characterized in that the third folding operation consists of folding sideparts near respective sides of the said sheet along respective fold lines parallel to and spaced from the said longitudinal centerline of the sheet. In this method the third folding operation is of the same kind as the second folding operation so that also after the third folding operation the centerline of the resulting sheet remains in the same plane. This has certain consequences for the structure of the production facility. Also problems may more easily occur, as in de third folding operation eight layers of film have to be folded over. An advantage, however, is that the resulting roll remains symmetrical, which means that the roll can be unfolded from the center as in the already mentioned US patent specification 4,674,999.

The method according to the invention enables the application of an embodiment which is characterized in that the said extruded tubular film has a diameter between 5 and 6 metres and in that the finished roll has a width dimension between 1 and 2 metres, preferably between 1 and 1.5 metres. In practice there is a growing need for film having such large width, especially in countries where silos of large diameters are used. A prefered embodiment of the invention is characterized in that the said tubular plastic film is left unslit in the longitudinal direction. With this embodiment the user of the packaged roll of film is enabled to determine at which part the tube should be slit in the longitudinal direction. In many cases this will depend on the intended use of the film.

The invention also relates to a roll of plastic film manufactured according to the method of the invention which product is defined in one or more of the claims 7 to 12.

The invention will hereinafter de described by reference to the acompanying drawings showing non-limiting examples of the invention and wherein:
Fig. 1 is a perspective view of a tubular section of plastic film having a gusseted construction after a first folding operation,
Fig. 2 is the view according to fig. 1 in which however sideparts of the sheet have been partly folded in the direction of the center of the sheet during a second folding operation,
Fig. 3 is the view of fig. 2 after completion of the second folding operation,
Fig. 4 is a perspective view of a roll of plastic film which has been subjected to the first and second folding operations of figs. 1, 2, 3 as well as a third folding operation consisting of double folding of the sheet of fig. 3,
Fig. 5 is the view of fig. 3 in a situation comparable to fig. 2 whit relation to a alternative third folding operation, and
Fig. 6 is a view similar to fig. 4 in which the sheet has been folded according to the folding operations of figs. 1, 2 and 5.

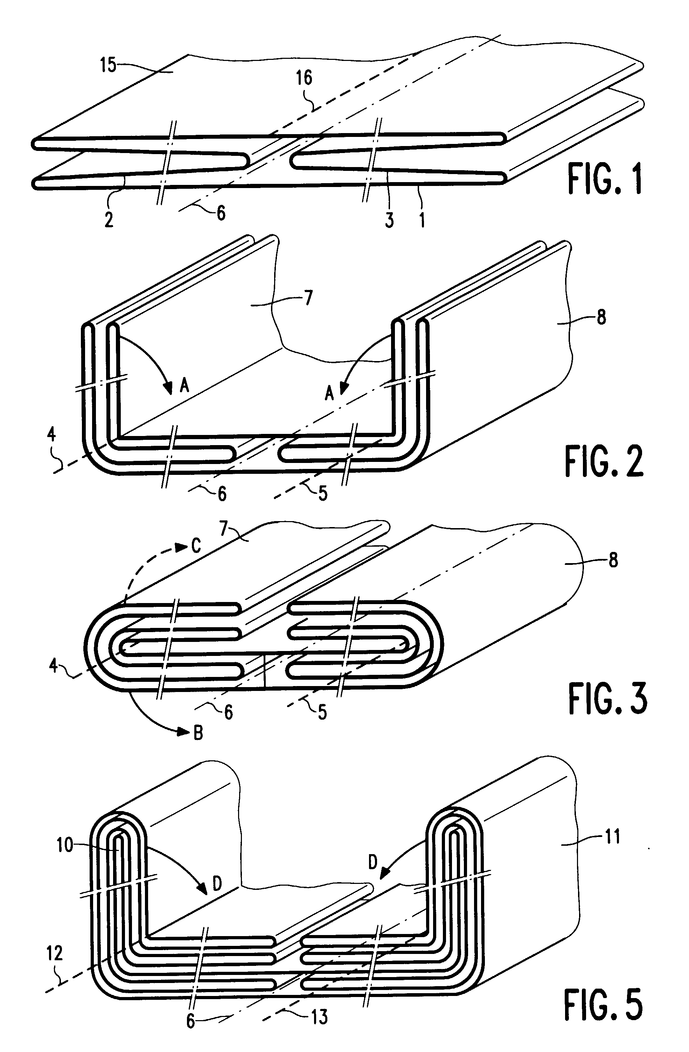

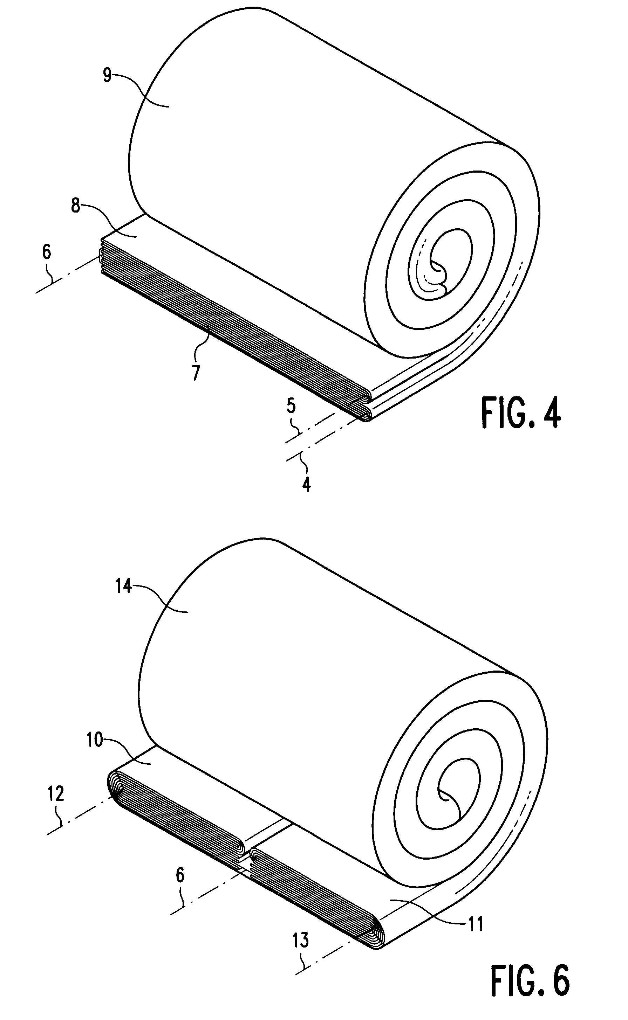

Plastic film 1 consists of an extruded tube 15 in a gusseted construction in which opposite sideparts of the tube have been folded inwardly to form inner folded parts 2 and 3. In the drawing the thickness of the film (which is often in the order of magnitude of a few tens of microns) and the width of the foil (for example 16 metres) are of course not presented to scale. The thickness of the film as well as the thickness of the folded sheet have been highly exaggerated in the drawing. In fig. 1 the gusseted construction has been flattened to a sheet having four layers of film disposed over each other. As shown in fig. 2 the sheet of fig. 1 is folded in a second folding operation by deforming the sheet into a U-shape by folding sideparts of the sheet along foldlines 4 and 5 parallel to and spaced from the longitudinal centerline 6 of the sheet. The sideparts 7 and 8 are subsequently folded inwardly according to the arrows A so that a sheet according to fig. 3 results having eight layers of film disposed over each other. This sheet subsequently is folded double in a third folding operation by folding one half of the sheet in the direction of the arrow B in a folding direction such that the said sideparts 7 and 8 are disposed on the outside of the double folded sheet, see fig. 4. This sheet is rolled into a cilindrical body or roll 9. Alternatively the sheet of fig. 3 could be folded double by folding the sidepart 7 in the direction of the arrow C over the sidepart 8. This, however, would produce larger stress in the central part of the sheet which connects the sideparts 7 and 8 as these parts are disposed more to the lower side of the sheet.

Fig. 5 shows an alternative method for folding the sheet of fig. 3 in a third folding operation. In this method the third folding operation consists of a folding operation which is similar to the second folding operation depicted in fig. 3 and in which the sideparts 10, 11, which are parts of the sideparts 7 and 8 of the sheet of fig. 3, are folded inwardly along respective foldlines 12 and 13 parallel to and spaced from the centerline 6. The thus folded sheet having 16 layers of film disposed over each other is subsequently rolled into a roll 14 (fig. 6). This roll basically has the same width as the roll 9 of fig. 4. The difference, however, is that in the roll 9 of fig. 4 the centerline 6 of the original flattened tube 15 is disposed at the side while with the roll 14 according to fig. 6 this line is disposed at the center of the sheet.

Starting form an extruded tube 15 having a diameter between 5 and 6 metres and consequently a circumferential dimension between 16 and 19 metres, the resulting sheet and therefore the roll 9 or the roll 14 will have a resulting width between 1 and 2 metres. Such a width is still manageable,
particularly if the roll is not wider than 1.5 metres. Such rolls can be disposed for example in the trunk of a passenger car or in the loading space of a utility van or a small pickup for unproblematic transportation. With the roll of plastic film disclosed in the previously sited US patent specification 4,674,999 the tube 15 has been slit along the line 16 in longitudial direction. The sheet of film does no longer constitute a tube and therefor may be unfolded to the maximum width. According to a characteristic of an embodiment of the present invention the tube 15 is left unslit in the longitudinal direction. This will enable the eventual user to cut open the tube at any place which may best suit the said user. This may have certain advantages for the user.

For folding the sheet during a folding operation according to figs. 2 and 5 of the drawing into a U-shape and for double folding according to fig. 3 during production, devices are being applied in the plane in which the film is moving between the extruder where the plastic film is extruded up till the rolling mechanism where the film is packaged into a roll, which devices have the ability to influence the sheet of continuously moving film locally and to modify the sheet into a smaller sheet of folded film. These means are known in itself and thereform have not been included in the drawing. These means generally consist of guiding means for the edges of the sheets which guiding means guide the sideparts of the sheets in the desired direction. During the folding operation according to figs. 2 or 5 the sheet of folded film continues to move in the same general direction. With a double folding operation according to fig. 3 the double folded sheet moves in a direction perperdicular to the previous direction of movement. Suitable means such as rollers may be provided to flatten the sheet of film in the plane of movement subsequent to a folding operation so that a flattened sheet of folded plastic film results.

Although the invention has been explained with reference to two examples the invention is not limited to these examples but extends to all possible embodiments within the scope of the appended claims. Film 1 for example may be slit during manufacture of the roll 9 in a suitable slitting step during a suitable stage of production. Basicly the second and third folding operations may be reversed, meaning that first a double folding according to fig. 3 is effected and subsequently a double folding of the sideparts according to figs. 2 and 5. It is also possible to repeat the folding operation of fig. 3, which also results in a sheet of film having 16 layers of film disposed over each other.

## Claims

1. A method of folding a plastic film (1) such as a film for greenhouses, silos and general use on or in the ground from an extruded tubular plastic film (15), comprising the steps of a first folding operation consisting of inwardly folding at two opposite sides of the tube and subsequent flattening of the tube into a flat sheet of flattened tubular plastic film having a gusseted construction with four layers of plastic film disposed over each other at each side and the subsequent application of a second folding operation for producing a narrower sheet having eight layers of plastic film disposed over each other near the edges, as well as a packaging step comprising a rolling operation for rolling the so folded sheet of flattened tubular plastic film into a cylindrically shaped object or roll (9, 14) characterized in that prior to the rolling operation the said sheet is folded in a third folding operation to form an even narrower sheet of flattened tubular plastic film having sixteen layers of plastic film disposed on each other near the edges.

2. The method of claim 1, characterized in that in the said second folding operation sideparts near respective sides of the said sheet are folded along respective fold lines (4, 5) parallel to and spaced from a longitudinal centerline (6) of the sheet and in the third folding operation the sheet is folded double along the said centerline to form a double folded sheet.

3. The method of claim 2, characterized in that the double folding is executed in a folding direction (B), such that the said sideparts are disposed on the outside of the double folded sheet.

4. The method according to claim 1, characterized in that the third folding operation consists of folding sideparts (10, 11) near respective sides of the said sheet along respective fold lines (12, 13) parallel to and spaced from the said longitudinal centerline (6) of the sheet.

5. The method according to claim 1, characterized in that the said extruded tubular film (15) has a diameter between 5 and 6 metres and in that the finished roll (9, 14) has a width dimension between 1 and 2 metres, preferably between 1 and 1.5 metres.

6. The method of one of the previous claims characterized in that the said tubular plastic film (15) is left unslit in the longitudinal direction.

7. A roll (19, 14) of plastic film (1) such as a film for greenhouses, for silos and general use on or in the ground from an extruded tubular plastic film (15) which has been folded in a first folding operation consisting of inwardly folding at two opposite sides of the tube and subsequent flattening of the tube into a flat sheet of flattened tubular plastic film having a gusseted construction with four layers of plastic film disposed over each other at each side and in a second folding operation producing a narrower sheet having eight layers of plastic film disposed over each other near the edges and has been packaged in a packaging step comprising a rolling operation for rolling the so folded sheet of said flattened tubular plastic film into a cylindrically shaped object or roll (9, 14), characterized in that the said sheet of flattened tubular plastic has been folded in a third folding operation to an even narrower sheet having sixteen layers of film disposed over each other near the edges.

8. The roll of claim 7, characterized in that in the second folding operation sideparts near respective sides of the said sheet have been folded along respective foldlines (4, 5) parallel to and spaced from a longitudinal centerline (6) of the sheet and in the third folding operation the sheet is folded double along the said centerline (6) to form a double folded sheet.

9. The roll of claim 8, characterized in that the said sideparts (7, 8) are disposed on the outsides of the double folded sheet.

10. The roll of claim 7, characterized in that in the third folding operation sideparts (10, 11) of the sheet near respective sides of the said sheet have been folded along respective further fold lines (12, 13) parallel to and spaced from the said longitudinal centerline (6) of the sheet so that near the edges sixteen layers of foil are disposed over each other.

11. The roll of claim 7, characterized in that the tubular plastic film (15) is unslit in the longitudinal direction.

12. The roll of claim 7, characterized in that the plastic tubular film has a diameter between 5 and 6 metres and in that the roll has a width dimension between 1 and 2 metres, preferably between 1 and 1,5 metres.
